# FASCICULE DE BREVET EUROPEEN

(11) **EP 4 639 705 B1**
(45) Date de publication et mention de la délivrance du brevet: **28.10.2026**
(21) Numéro de dépôt: 23821571.9
(22) Date de dépôt: 07.12.2023
(51) Int. Cl.: H02J 1/10, H02J 7/35

(54) **INSTALLATION SOLAIRE À PANNEAU PHOTOVOLTAÏQUE**
SOLARANLAGE MIT PHOTOVOLTAISCHEM PANEL
SOLAR INSTALLATION WITH PHOTOVOLTAIC PANEL

(30) Priorité: 22.12.2022 FR 2214267
(43) Date de publication de la demande: 29.10.2025
(73) Titulaire: Commissariat à l'Energie Atomique et aux Energies Alternatives, 75015 Paris (FR)
(72) Inventeur: CHAMBION, Bertrand, 38054 Grenoble Cedex 09 (FR); CATELLANI, Stéphane, 38054 Grenoble Cedex 09 (FR)
(74) Mandataire: Cabinet Beaumont
(86) Numéro de dépôt international: PCT/EP2023/084653
(87) Numéro de publication internationale: WO 2024/132545

(56) Documents cités:
- EP-A1- 3 926 821
- WO-A1-2017/011547
- JP-A- H05 284 654
- US-A- 5 914 590

## Description

### Domaine technique

La présente description concerne de façon générale une installation solaire comprenant au moins un panneau photovoltaïque.

### Technique antérieure

Pour certaines applications, l'utilisation de panneaux photovoltaïques est soumise à des contraintes strictes. C'est le cas notamment pour l'utilisation de panneaux photovoltaïques dans des véhicules. Des exemples de systèmes à panneaux photovoltaïques peuvent être trouvés dans le document EP3926821.

La figure 1 représente schématiquement un véhicule 1 comprenant un panneau photovoltaïque 10 et une charge 20 alimentée par le panneau photovoltaïque 10, par exemple une batterie d'accumulateurs électriques.

La figure 2 représente une courbe d'évolution du courant I_{PV} fourni par le panneau photovoltaïque 10 en fonction de la tension V_{PV} entre les bornes du panneau photovoltaïque 10 sur laquelle on a ajouté différents seuils de tension issus de réglementations.

Une batterie de véhicule automobile est généralement conçue pour fonctionner sur une plage de tension limitée. Par exemple, une batterie de 12 V peut présenter une tension allant de 10 V à 15 V en fonction de son état de charge et de sa température. Un circuit de commande contrôle la charge et la décharge des accumulateurs électriques de la batterie. Le circuit de commande a besoin d'une tension d'alimentation minimale pour fonctionner convenablement. Cette tension est en générale de l'ordre de 5 V. Pour recharger d'une batterie présentant une tension de 15 V, il faut donc que le circuit de commande reçoive au moins une tension de 20 V pour pouvoir réaliser cette recharge.

Les réglementations peuvent imposer que n'importe quelle tension fournie à bord d'un véhicule soit inférieure à un seuil de tension. A titre d'exemple, la règlementation R100 en relation avec la norme ISO 6469-3 fixe ce seuil à 60 V pour les véhicules d'usage courant.

Une possibilité consiste à concevoir la structure du panneau photovoltaïque 10 dédié à des applications automobiles afin qu'il fournisse directement une tension inférieure à 60 V. La tension maximale pouvant être fournie par le panneau photovoltaïque 10 correspond généralement des conditions d'utilisation avec une irradiance forte, par exemple supérieure à 1000 W/m², et une température basse, par exemple de -45°C. Pour des températures ordinaires, la tension maximale pouvant être fournie par le panneau photovoltaïque 10 sera plus faible, par exemple de l'ordre de 47 V. En outre, il est généralement souhaitable de faire fonctionner un panneau photovoltaïque à un point de fonctionnement MPP correspondant à la fourniture de puissance maximale et qui correspond à une tension de l'ordre de 80 % de la tension maximale, c'est-à-dire de l'ordre de 37 V.

La marge en tension disponible pour le panneau photovoltaïque 10 est donc réduite en pratique à 17 V.

Dans le cadre des applications sur véhicules, la forme globale d'un panneau photovoltaïque est souvent courbe et est soumise à des ombrages non réguliers et aléatoires.

Un panneau photovoltaïque comprend un ensemble de cellules photovoltaïques connectées les unes aux autres par un circuit de connexion. Une cellule photovoltaïque se comporte généralement comme un interrupteur ouvert lorsqu'elle n'est pas éclairée. De ce fait, si toutes les cellules photovoltaïques d'un panneau photovoltaïque sont montées en série, l'absence d'éclairement d'une seule cellule photovoltaïque interrompt le fonctionnement du panneau photovoltaïque. Le circuit de connexion peut permettre d'isoler un ou plusieurs groupes de cellules photovoltaïques pour que le panneau photovoltaïque puisse continuer à fonctionner même lorsqu'une cellule photovoltaïque n'est pas éclairée. Toutefois, lorsqu'un groupe de cellules photovoltaïques du panneau photovoltaïque 10 est isolé, ceci entraîne une diminution de la tension pouvant être fournie par le panneau photovoltaïque. A titre d'exemple, un panneau photovoltaïque fournissant une tension optimale de 37 V et comprenant deux groupes ayant le même nombre de cellules photovoltaïques ne peut fournir qu'une tension optimale de 18,5 V lorsque l'un des groupes est isolé, ce qui est insuffisant pour permettre la recharge d'une batterie de 12 V. Une possibilité est de prévoir un nombre élevé de groupes de cellules photovoltaïques isolables séparément. Toutefois, ceci augmente le coût de fabrication du panneau photovoltaïque.

### Résumé de l'invention

Un objet d'un mode de réalisation est de pallier tout ou partie des inconvénients des installations solaires comprenant des panneaux photovoltaïques connues.

Un autre objet d'un mode de réalisation est que la tension fournie par le panneau photovoltaïque reste inférieure à un seuil de tension.

Un mode de réalisation prévoit une installation solaire comprenant un panneau photovoltaïque ayant des première et deuxième bornes, destinées à être couplées à une charge, et un premier circuit de limitation de la tension entre les première et deuxième bornes comprenant un premier transistor MOS couplant les première et deuxième bornes, le premier circuit étant configuré pour rendre passant le premier transistor MOS lorsque la tension dépasse un premier seuil de tension.

Selon un mode de réalisation, le premier circuit comprend un premier pont diviseur de tension couplant les première et deuxième bornes, un deuxième pont diviseur de tension couplant les première et deuxième bornes, et un amplificateur opérationnel comprenant une sortie couplée à la grille du premier transistor MOS, une entrée non inverseuse couplée à un premier point milieu du premier pont diviseur de tension, et une entrée inverseuse couplée à un deuxième point milieu du deuxième pont diviseur de tension.

Selon un mode de réalisation, le premier pont diviseur de tension comprend une première résistance en série avec une deuxième résistance, et le deuxième pont diviseur de tension comprend une troisième résistance en série avec une première diode Zener.

Selon un mode de réalisation, l'amplificateur opérationnel fonctionne en comparateur.

Selon un mode de réalisation, l'installation comprend un deuxième circuit de limitation de la tension entre les première et deuxième bornes comprenant un thyristor couplant les première et deuxième bornes, le deuxième circuit étant configuré pour rendre passant le thyristor lorsque la tension dépasse un deuxième seuil de tension, strictement supérieur au premier seuil de tension.

Selon un mode de réalisation, le deuxième circuit comprend un deuxième transistor MOS en série avec un condensateur, l'ensemble comprenant le deuxième transistor MOS et le condensateur couplant les première et deuxième bornes, et un circuit abaisseur de tension couplant une électrode du condensateur à la gâchette du thyristor, le deuxième circuit étant configuré pour rendre passant le deuxième transistor simultanément au premier transistor MOS.

Selon un mode de réalisation, le circuit abaisseur de tension comprend au moins une deuxième diode Zener.

Selon un mode de réalisation, le deuxième circuit comprend un transistor bipolaire en série avec une quatrième résistance, l'ensemble comprenant le transistor bipolaire et la quatrième résistance couplant les première et deuxième bornes, la sortie de l'amplificateur opérationnelle étant couplée à la base du transistor bipolaire, et la grille du deuxième transistor MOS étant couplée à un noeud entre le transistor bipolaire et la quatrième résistance.

Selon un mode de réalisation, la première borne est destinée à être connectée à une troisième borne de la charge. La deuxième borne est destinée à être connectée à une quatrième borne de la charge, et le premier circuit de limitation de la tension ne comprend pas de composant électronique couplé entre la première borne et la troisième borne ou couplé entre la deuxième borne et la quatrième borne.

Un mode de réalisation prévoit également un véhicule comprenant une installation solaire telle que définie précédemment.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

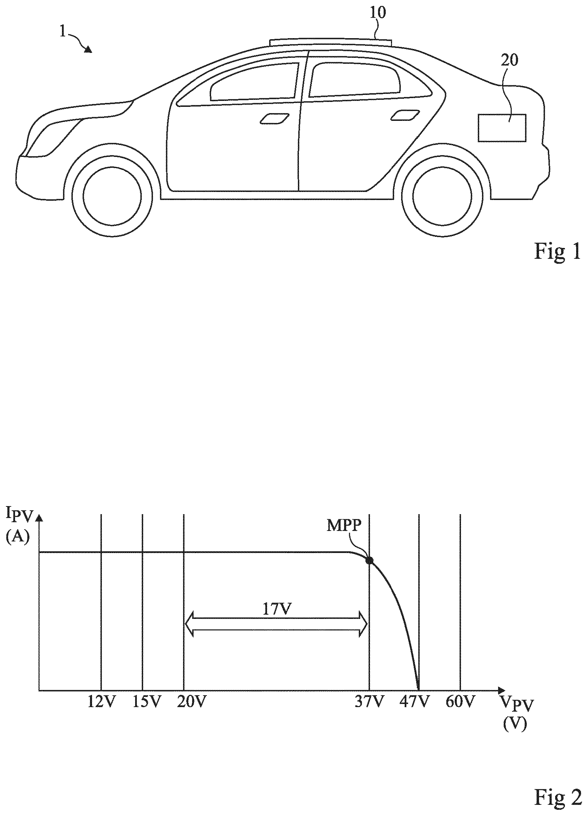

la figure 1, décrite précédemment, est une vue schématique d'un véhicule solaire ;
la figure 2, décrite précédemment, illustre des contraintes de tension pour un véhicule solaire ;

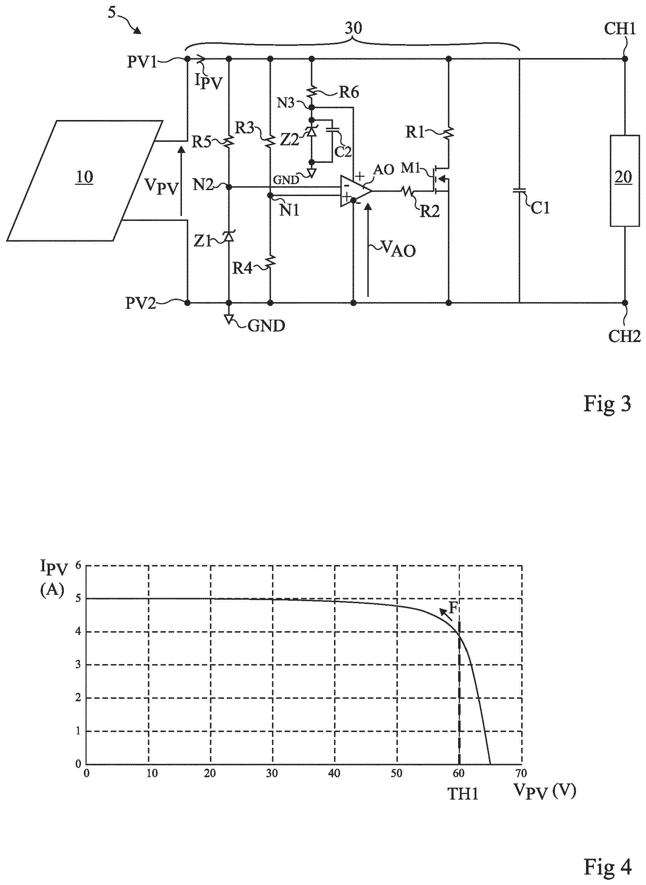

la figure 3 est un schéma électrique d'un mode de réalisation d'une installation solaire comprenant un panneau photovoltaïque et un circuit limiteur de tension ;
la figure 4 représente une courbe d'évolution du courant fourni par un panneau photovoltaïque en fonction de la tension entre les bornes du panneau photovoltaïque ;

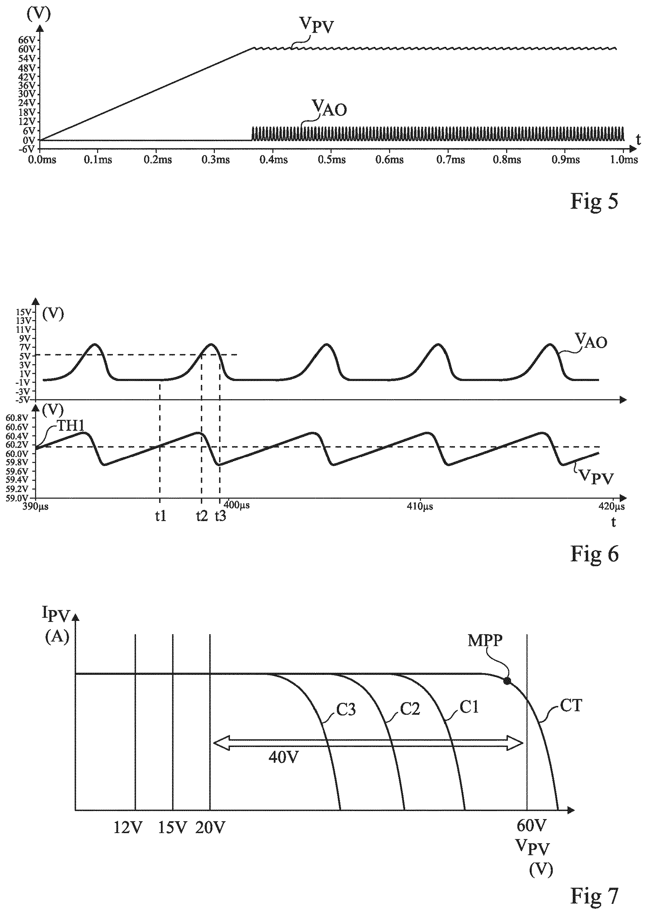

la figure 5 représente des courbes d'évolution de tensions au cours du fonctionnement de l'installation solaire de la figure 3 ;
la figure 6 est une vue agrandie d'une partie de la figure 5 ;
la figure 7 illustre des contraintes de tension pour le fonctionnement de l'installation solaire de la figure 3 ;

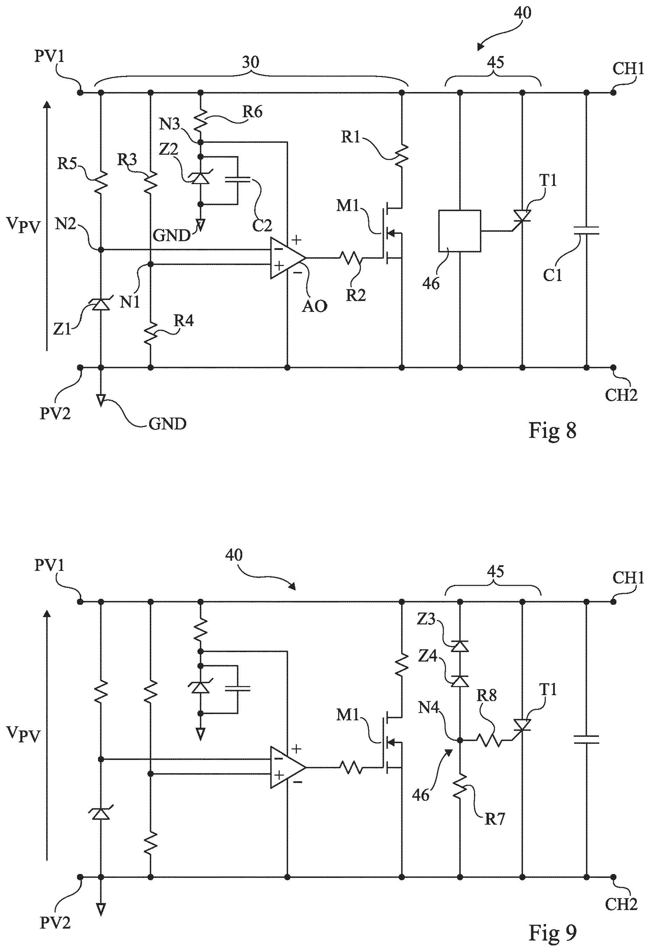

la figure 8 est un schéma électrique d'un autre mode de réalisation du circuit limiteur de tension ;
la figure 9 est un schéma électrique d'un mode de réalisation plus détaillé du circuit limiteur de tension de la figure 8 ;

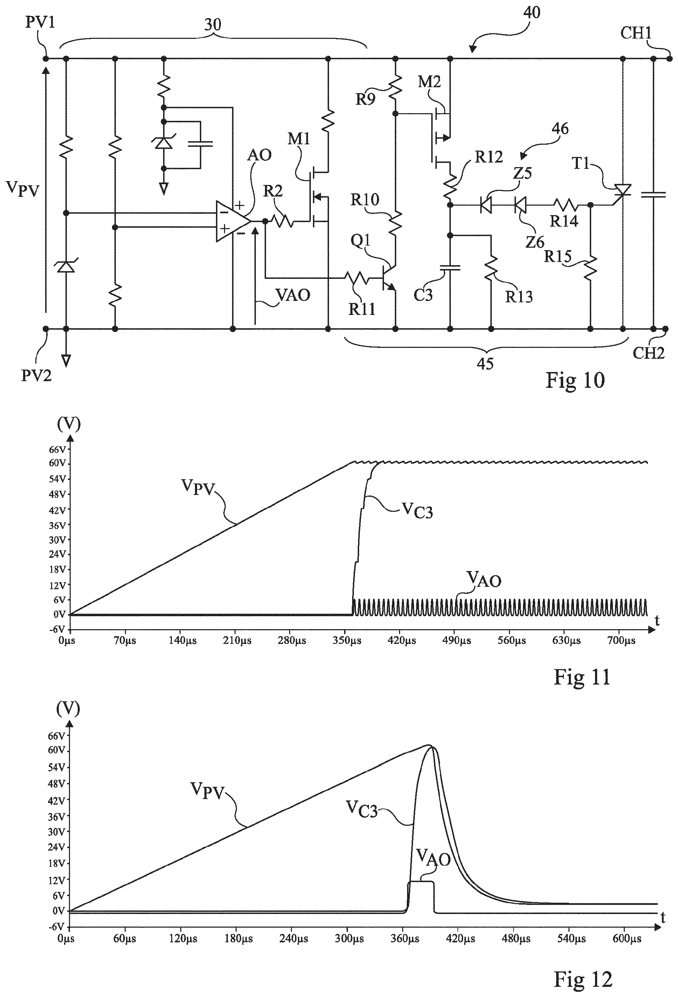

la figure 10 est un schéma électrique d'un autre mode de réalisation plus détaillé du circuit limiteur de tension de la figure 8 ;
la figure 11 représente des courbes d'évolution de tensions au cours du fonctionnement de l'installation solaire comprenant le circuit limiteur de tension de la figure 10 lors d'un fonctionnement normal ;
la figure 12 représente des courbes d'évolution de tensions au cours du fonctionnement de l'installation solaire comprenant le circuit limiteur de tension de la figure 10 lors d'un défaut de fonctionnement ;

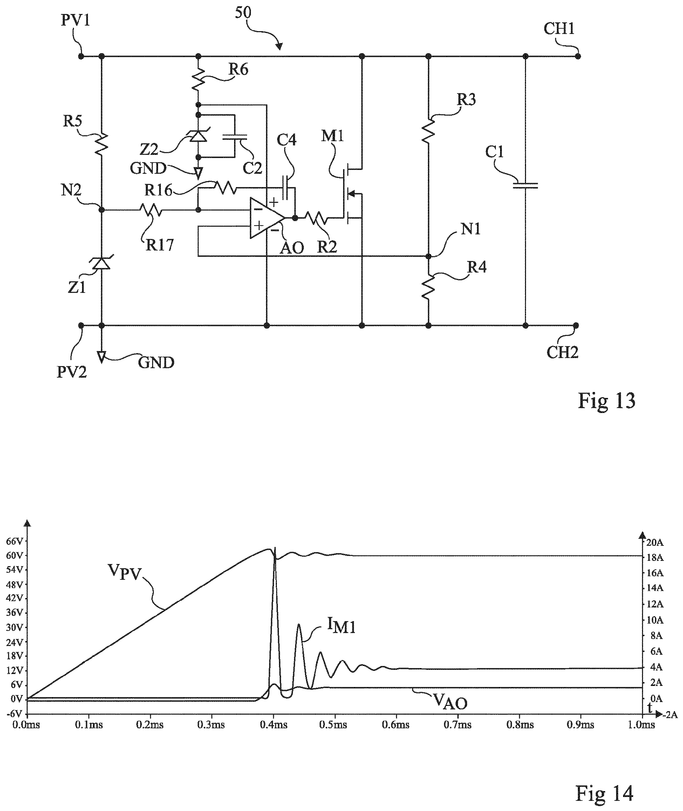

la figure 13 est un schéma électrique d'un autre mode de réalisation du circuit limiteur de tension ; et
la figure 14 représente des courbes d'évolution de tensions et de courant au cours du fonctionnement de l'installation solaire comprenant le circuit limiteur de tension de la figure 13.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés.

Sauf précision contraire, les expressions "environ", "approximativement", "sensiblement", et "de l'ordre de" signifient à 10 % près, de préférence à 5 % près. Sauf précision contraire, les adjectifs numéraux ordinaux, tels que "premier", "deuxième", etc., sont utilisés seulement pour distinguer des éléments entre eux. En particulier, ces adjectifs ne limitent pas les modes de réalisation décrits à un ordre particulier de ces éléments.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

La figure 3 est un schéma électrique d'un mode de réalisation d'une installation solaire 5 pour l'alimentation d'une charge 20, par exemple une batterie d'accumulateurs électriques. La charge 20 comprend des bornes CH1 et CH2.

L'installation solaire 5 comprend :
- un panneau photovoltaïque 10 comprenant une borne PV1 couplée, de préférence connectée à la borne CH1, et une borne PV2 couplée, de préférence connectée à la borne CH2 ; et
- un circuit limiteur de tension 30 couplé entre les bornes PV1 et PV2.

Dans le présent mode de réalisation, le circuit limiteur de tension 30 correspond à un premier circuit écrêteur à base d'un transistor MOS comprenant :
- un transistor MOS M1 en série avec une résistance R1, l'ensemble comprenant le transistor M1 et la résistance R1 étant couplé, de préférence connecté, entre les bornes PV1 et PV2 ;
- un comparateur AO, de préférence un amplificateur opérationnel, comprenant une première entrée et une deuxième entrée et une sortie ;
- une résistance R2 couplée, de préférence connectée, entre la sortie du comparateur et la grille du transistor M1 ;
- un pont diviseur de tension comprenant deux résistances R3 et R4 en série, l'ensemble comprenant les résistances R3 et R4 étant couplé, de préférence connecté, entre les bornes PV1 et PV2, le point milieu N1 entre la résistance R3 et la résistance R4 étant couplé, de préférence connecté, à la première entrée du comparateur AO, la résistance R3 reliant le point milieu N1 à la borne PV1 et la résistance R4 reliant le point milieu N1 à la borne PV2 ; et
- un pont diviseur de tension comprenant une résistance R5 en série avec une diode Zener Z1, l'ensemble comprenant la résistance R5 et la diode Zener Z1 étant couplé, de préférence connecté, entre les bornes PV1 et PV2, le point milieu N2 entre la résistance R5 et la diode Zener Z1 étant couplé, de préférence connecté, à la deuxième entrée du comparateur AO, la résistance R5 reliant le point milieu N2 à la borne PV1 et la diode Zener Z1 reliant le point milieu N2 à la borne PV2.

Le circuit limiteur de tension 30 peut en outre comprendre un condensateur C1 couplé, de préférence connecté, entre les bornes PV1 et PV2. Selon une variante, le condensateur C1 n'est pas présent.

On appelle V_{PV} la tension entre les bornes PV1 et PV2 et I_{PV} le courant sortant du panneau photovoltaïque par la borne PV1. On appelle en outre V_{AO} la tension de sortie du comparateur AO.

Selon un mode de réalisation, le potentiel à la borne PV2 est pris comme potentiel de référence bas, comme cela est schématiquement représenté en figure 3, par le symbole de la masse GND connecté à la borne PV2. On considère par la suite que le potentiel à la borne PV2 est égal à 0 V, et sauf indication contraire, les potentiels sont référencés à la masse GND. La cathode de la diode Zener Z1 est orientée du côté de la borne PV1.

Selon un mode de réalisation, le comparateur AO est un amplificateur opérationnel qui fonctionne en mode comparateur. La première entrée du comparateur AO correspond à l'entrée non inverseuse (+) de l'amplificateur opérationnel et la deuxième entrée du comparateur AO correspond alors à l'entrée inverseuse (-) de l'amplificateur opérationnel.

Selon un mode de réalisation, l'amplificateur opérationnel AO est du type mono-tension alimenté par le panneau photovoltaïque 10 et qui se met en route à partir d'une tension relativement faible du panneau photovoltaïque 10, par exemple 12 V. La borne d'alimentation négative de l'amplificateur opérationnel AO est couplé, de préférence connecté, à la borne PV2. Le circuit limiteur de tension 30 comprend un pont diviseur de tension comprenant une résistance R6 en série avec une diode Zener Z2, l'ensemble comprenant la résistance R6 et la diode Zener Z2 en série est couplé, de préférence connecté, entre les bornes PV1 et PV2. Un condensateur C2 est monté en parallèle de la diode Zener Z2. La cathode de la diode Zener Z2 est orientée du côté de la borne PV1. Le point milieu N3 entre la résistance R6 et la diode Zener Z2 est couplé, de préférence connecté, à la borne d'alimentation positive de l'amplificateur opérationnel AO. La diode Zener Z2 stabilise à tension au point milieu N3, par exemple à 12 V environ. Une partie du courant dérivée par le pont diviseur de tension formé par la résistance R6, la diode Zener Z2, et le condensateur C2 sert à alimenter l'amplificateur opérationnel AO. L'amplificateur opérationnel AO utilisé en comparateur fournit une tension de sortie V_{AO} à un niveau haut, sensiblement égal à la tension à sa borne d'alimentation positive, ou à un niveau bas, sensiblement égal à la tension à sa borne d'alimentation négative, c'est-à-dire 0 V, en fonction de la différence entre la tension à son entrée non inverseuse (+) et la tension à son entrée inverseuse (-).

Selon un mode de réalisation, l'amplificateur opérationnel AO est un amplificateur opérationnel rapide avec une vitesse de montée (en anglais slew-rate) élevée, par exemple supérieure à 30 V/µs.

Selon un mode de réalisation, le transistor M1 est un transistor MOS de puissance. Selon un mode de réalisation, le transistor M1 est un transistor MOS à canal N. La source du transistor M1 est couplée, de préférence connectée, à la borne PV2, et le drain du transistor M1 est couplé, de préférence connecté, à une borne de la résistance R1, l'autre borne de la résistance R1 étant couplée, de préférence connectée, à la borne PV1.

A titre d'exemple, la résistance R2 a une valeur comprise entre 10 ohms et 100 ohms.

Le principe de fonctionnement du circuit limiteur de tension 30 va maintenant être décrit. Le circuit limiteur de tension 30 détecte que la tension de sortie V_{PV} du panneau photovoltaïque 10 dépasse un seuil de tension TH1. Quand le seuil de tension TH1 est atteint, le circuit limiteur de tension 30 court-circuite les bornes PV1 et PV2 pendant une durée très courte, de l'ordre de la microseconde, de façon que le point de fonctionnement du panneau photovoltaïque 10 n'augmente pas en tension. La mise en court-circuit des bornes PV1 et PV2 entraîne une diminution de la tension V_{PV}. Comme le court-circuit n'est pas maintenu, la tension V_{PV} augmente à nouveau jusqu'à dépasser le seuil de tension TH1, ce qui entraîne un nouveau court-circuit de courte durée. Tant que la tension V_{PV} tend à revenir dépasser le seuil de tension TH1, la salve de courts-circuits de durées courtes continue.

Le pont diviseur de tension comprenant la résistance R5 en série avec la diode Zener Z1 donne une référence de tension stable sur l'entrée inverseuse de l'amplificateur opérationnel AO. Cette référence de tension est la valeur de la tension Zener V_{Z1} de la diode Zener Z1 La résistance R5 sert à polariser la diode Zener Z1. Le pont diviseur comprenant les résistances R3 et R4 en série sert à mesurer la valeur de la tension V_{PV} du panneau photovoltaïque 10. Ce pont est déterminé de façon que le point milieu N1 soit proche de la tension V_{Z1} qui servira de tension de basculement pour la sortie de l'amplificateur opérationnel AO juste au moment où la tension V_{PV} franchit le seuil de tension TH1. Le seuil de tension TH1 est donné par la relation suivante : $TH 1 = {V}_{Z 1} \left(\frac{R 3 + R 4}{R 4}\right)$ [ Math 1]

La figure 4 représente une courbe d'évolution du courant I_{PV} fourni par le panneau photovoltaïque 10 en fonction de la tension V_{PV} entre les bornes PV1 et PV2. Si le point de fonctionnement du panneau photovoltaïque 10 atteint le seuil de tension TH1, par exemple égal à environ 60 V, alors le fait d'appliquer un court-circuit momentané sur le panneau photovoltaïque 10 va faire que le point de fonctionnement est repoussé comme indiqué par la flèche F vers les tensions plus basses, en particulier vers 0 V si le court-circuit était maintenu.

Des simulations ont été réalisées. Pour les simulations, la charge 20 n'est pas présente et le condensateur C1 est utilisé comme charge avec une capacité égale à 30 µF. Pour les simulations, la tension Zener V_{Z1} de la diode Zener Z1 est égale à 6,2 V. La résistance R3 est égale à 47 kΩ et la résistance R4 est égale à 5,4 kΩ. Le seuil de tension TH1 est donc égal à 60,16 V. La résistance R2 est égale à 100 Ω. La résistance R1 est égale à 0,1 m Ω.

La figure 5 représente des courbes d'évolution de la tension V_{PV} et de la tension V_{AO} en fonction du temps après la mise en route de l'installation solaire 5 de la figure 3. La figure 6 est une vue de détail de la figure 5.

A la mise en route de l'installation solaire 5, la tension V_{PV} s'élève depuis 0 V. la tension V_{PV} est alors inférieure au seuil de tension TH1. La tension V_{AO} est donc sensiblement à 0 V. Le transistor M1 est donc à l'état bloqué et est sensiblement équivalent à un interrupteur ouvert. Dès que la tension V_{PV} atteint le seuil de tension TH1, la tension V_{AO} s'élève. Le transistor M1 devient donc passant, et est sensiblement équivalent à un interrupteur fermé. Ceci entraîne une diminution de la tension V_{PV}. Dès que la tension V_{PV} diminue en dessous du seuil de tension TH1, la tension V_{AO} chute sensiblement à 0 V et le transistor M1 devient non passant. La tension V_{PV} augmente alors à nouveau, de sorte qu'une succession de cycles de fermeture et d'ouverture du transistor M1 est obtenue. De cette façon on voit que la tension V_{PV} est toujours limitée à un niveau en dessous de la somme du seuil de tension TH1 et d'une marge. En figure 6, on a indiqué des instants t1, t2, et t3 successifs. L'instant t1 est l'instant auquel la tension V_{PV} dépasse le seuil TH1 et que la tension de sortie V_{AO} de l'amplificateur opérationnel AO commence à commuter. L'instant t2 est l'instant auquel le transistor M1 devient passant, lorsque la tension de grille du transistor M1 dévient supérieure à 5,5 V. L'instant t3 est l'instant auquel le transistor M1 devient bloqué, lorsque la tension de grille du transistor M1 devient inférieure à 5,5 V. Entre les instants t2 et t3, le transistor M1 est passant et court-circuite les bornes PV1 et PV2, ce qui entraîne une diminution de la tension V_{PV}. La durée entre les instants t1 et t2 correspond notamment à la durée de basculement de la tension de sortie V_{AO} de l'amplificateur opérationnel AO et la durée pour la mise à l'état passant du transistor M1, ce qui dépend notamment de la constante de temps due à la résistance R2 et la capacité grille-source du transistor M1 et de la vitesse de montée en sortie de l'amplificateur opérationnel AO.

La présente invention consiste en l'utilisation d'un circuit électronique pour écrêter la caractéristique I(V) du panneau photovoltaïque 10 à une valeur prédéfinie. Le principe de base déployé est un court-circuit du panneau photovoltaïque 10 avec contrôle de la tension intermittente. La solution proposée n'ajoute pas d'élément en série sur la ligne puissance reliant le panneau photovoltaïque 10 à la charge 20. Ceci permet de façon avantageuse d'éviter toute perte d'énergie en ligne. D'autre part, l'énergie dissipée durant la limitation de tension (c'est-à-dire le court-circuit intermittent) a lieu par conséquent dans le panneau photovoltaïque 10, en particulier dans les cellules photovoltaïques, donc par une dissipation sur une surface élevée, ce qui limitera les phénomènes d'auto-échauffement locaux.

La figure 7 représente une courbe d'évolution du courant I_{PV} fourni par le panneau photovoltaïque 10 en fonction de la tension V_{PV} entre les bornes du panneau photovoltaïque 10 de l'installation solaire 5 de la figure 3 sur laquelle on a ajouté différents seuils de tension issus de réglementations.

Le circuit limiteur de tension 30 permet de façon avantageuse d'exploiter pleinement la plage de tension du panneau photovoltaïque 10, tout en bénéficiant de la possibilité d'isoler certains groupes de cellules photovoltaïques du panneau photovoltaïque 10 (entraînant une perte de tension) lors d'ombrage partiel du panneau photovoltaïque 10, tout en restant sur un point de fonctionnement électrique compatible avec la chaine de recharge coté véhicule. Ceci est illustré en figure 7 par les courbes CT, C1, C2, C3 qui représentent les courbes courant/tension du panneau photovoltaïque 10 respectivement lorsque que tous les groupes de cellules photovoltaïques sont actifs, lorsqu'un groupe de cellules photovoltaïques est isolé, lorsque deux groupes de cellules photovoltaïques sont isolés, et lorsque trois groupes de cellules photovoltaïques sont isolés.

Cette augmentation de plage de tension disponible autorise automatiquement un découpage plus fin du panneau photovoltaïque 10 en terme d'isolation de groupes de cellules photovoltaïques du panneau photovoltaïque 10. Le panneau photovoltaïque 10 devient alors plus robuste face aux ombrages partiels et présente de meilleures performances pour l'application visée.

Selon un autre mode de réalisation, pour fiabiliser le circuit limiteur de tension et le rendre plus sécuritaire à long terme ou sous fortes sollicitations de toutes natures, le circuit limiteur de tension comprend en outre un deuxième circuit écrêteur à base d'un thyristor.

La figure 8 est un schéma électrique d'un autre mode de réalisation d'un circuit limiteur de tension 40. Le circuit limiteur de tension 40 comprend le premier circuit écrêteur 30 de la figure 3 et comprend, en outre, un deuxième circuit écrêteur 45 comprenant :
- un thyristor T1 dont l'anode est couplée, de préférence connectée, à la borne PV1 et dont la cathode est couplée, de préférence connectée, à la borne PV2 ; et
- un circuit de déclenchement 46 du thyristor T1 connecté à la gâchette du thyristor T1.

La figure 9 est un schéma électrique d'un mode de réalisation plus détaillé du circuit limiteur de tension 40 dans lequel le circuit de déclenchement 46 du deuxième circuit écrêteur 45 comprend :
- un pont diviseur de tension comprenant une résistance R7 et deux diodes Zener Z3 et Z4 en série, l'ensemble comprenant la résistance R7 et les deux diodes Zener Z3 et Z4 étant couplé, de préférence connecté, entre les bornes PV1 et PV2 ; et
- une résistance R8 couplant, de préférence connectant, le point milieu N4 entre la résistance R7 et les deux diodes Zener Z3 et Z4 et la gâchette du thyristor T1.

Selon un mode de réalisation, la cathode de la diode Zener Z3 est connectée à la borne PV1 et la cathode de la diode Zener Z4 est connectée à l'anode de la diode Zener Z3.

Le déclenchement du thyristor T1 est obtenu lorsque la tension V_{PV} dépasse un seuil de tension TH2, supérieur strictement au seuil de tension TH1. Le seuil de tension TH2 est déterminé par la valeur des diodes Zener Z3 et Z4 qui fixe la valeur de tension au point milieu N4 pour laquelle le courant d'amorçage sur la gâchette du thyristor T1 est atteint, par exemple quelques milliampères.

A titre d'exemple, la tension Zener de la diode Zener Z3 est égale à 51 V et la tension Zener de la diode Zener Z4 est égale à 12 V, de façon que le seuil de tension TH2 est égal à 63 V environ, soit supérieur d'environ 3 V au seuil de tension TH1.

Dans le mode de réalisation illustré en figure 9, le déclenchement du thyristor T1 est découplé de celui du transistor M1 et chaque déclenchement du thyristor T1 ou du transistor M1 est indépendant l'un de l'autre. C'est juste la sélection du seuil de tension TH2 associé au thyristor T1 qui est supérieur au seuil de tension TH1 associé au transistor M1 qui fait que le thyristor T1 ne se déclenche pas avant le transistor M1.

Lorsqu'il est déclenché, le thyristor T1 maintient en en court-circuit les bornes PV1 du PV2 du panneau photovoltaïque 10 tant que le panneau photovoltaïque 10 continue de fonctionner, notamment tant qu'il y a assez de lumière illuminant le panneau photovoltaïque 10. Une intervention d'un opérateur est alors nécessaire pour faire fonctionner le circuit limiteur 40 à nouveau correctement. Le seuil de tension TH2 est supérieur strictement au seuil de tension TH1, de sorte que le déclenchement du thyristor T1 ne se produit que lors d'un mauvais fonctionnement du transistor M1.

Le thyristor T1 se déverrouille lorsque le courant qui le traverse tombe à 0 A, ce qui se produit lorsque le panneau photovoltaïque 10 ne reçoit plus de lumière, notamment pendant la nuit. De façon avantageuse, si le lendemain le défaut subsiste sur le circuit écrêteur 30, le thyristor TH1 est à nouveau enclenché si la tension V_{PV} atteint le seuil de tension TH2. Le deuxième circuit écrêteur 45 est donc une sécurité vis-à-vis d'un défaut de fonctionnement du premier circuit écrêteur 30.

La figure 10 est un schéma électrique d'un autre mode de réalisation plus détaillée du circuit limiteur de tension 40 dans lequel le circuit de déclenchement 46 du deuxième circuit écrêteur 45 comprend :
- un transistor bipolaire Q1 et deux résistances R9 et R10 en série ;
- une résistance R11 couplant, de préférence connectant, la sortie du comparateur AO à la base du transistor bipolaire Q1 ;
- un transistor MOS M2, une résistance R12 et un condensateur C3 en série avec une résistance R13 montée en parallèle du condensateur C3 ;
- deux diodes Zener Z5 et Z6 et une résistance R14 en série, l'ensemble comprenant les deux diodes Zener Z5 et Z6 et la résistance R14 en série couplant, de préférence connectant, le point milieu entre la résistance R12 et le condensateur C3 et la gâchette du thyristor T1 ; et
- une résistance R15 couplant, de préférence connectant, la gâchette du thyristor T1 à la borne PV2.

Selon un mode de réalisation, le transistor bipolaire Q1 est un transistor NPN dont l'émetteur est couplé, de préférence connecté, à la borne PV2, les résistances R9 et R10 en série couplant, de préférence connectant, le collecteur du transistor bipolaire Q1 et la borne PV1.

Selon un mode de réalisation, le transistor M2 est un transistor MOS à canal P. La source du transistor M2 est couplée, de préférence connectée, à la borne PV1, et le drain du transistor M2 est couplé, de préférence connecté, à une borne de la résistance R12, l'autre borne de la résistance R12 étant couplée, de préférence connectée, à une électrode du condensateur C3, l'autre électrode du condensateur C3 étant couplée, de préférence connectée, à la borne PV2.

Le fonctionnement du circuit limiteur de courant 40 représenté en figure 10 va maintenant être décrit. Le comparateur AO passe sa sortie à l'état haut lorsque la tension V_{PV} dépasse le seuil de tension TH1. Ceci rend passant le transistor M1 à travers la résistance de grille R2. Ceci correspond au fonctionnement du premier circuit écrêteur 30.

Le passage de la sortie du comparateur AO à l'état haut rend également passant le transistor bipolaire Q1 par l'intermédiaire de la résistance R11. Ceci amène le potentiel du collecteur du transistor bipolaire Q1, auparavant égal au potentiel à la borne PV1, à un potentiel proche d'environ 0 V. Plus précisément, la tension collecteur-émetteur du transistor Q1 en saturation est égale à 0,2 V. La mise en conduction du transistor Q1 polarise le pont diviseur formé par les résistances R9 et R10 qui présente alors sur la grille du transistor M2 une tension de grille V_{G2} donnée par la relation suivante : ${V}_{G 2} = {V}_{PV} \left(\frac{R 10}{R 9 + R 10}\right)$ [ Math 2]

Les résistances R9 et R10 sont choisies pour que la tension V_{G2} soit d'environ 15 V en dessous de la tension V_{PV}. La tension grille-source V_{GS2} du transistor M2 est alors égale à environ -15 V. Le transistor M2 est donc passant.

Le transistor M2 reste passant tant que la tension V_{PV} est supérieure au seuil de tension TH1. Lorsque le transistor M2 est passant, une charge du condensateur C3 se produit.

Lorsque le premier circuit écrêteur 30 fonctionne normalement, le transistor M2 est à l'état passant ou à l'état bloqué au rythme de la tension de sortie V_{AO} fournie par le comparateur AO. On obtient ainsi la charge complète du condensateur C3. Le potentiel V_{C3} à l'électrode du condensateur C3 située du côté du transistor M2 s'élève donc sensiblement jusqu'à la tension V_{PV}.

Le seuil de tension TH2 qui contrôle le déclenchement du thyristor T1 correspond à la tension à l'anode de la diode Zener Z6 qui est asservie à la tension V_{C3}. Le seuil de tension TH2 est égal à la somme de la tension Zener V_{Z5} de la diode Zener Z5 et de la tension Zener V_{Z6} de la diode Zener Z6. La tension Zener V_{Z5} de la diode Zener Z5 et la tension Zener V_{Z6} de la diode Zener Z6 sont choisies pour que le seuil de tension TH2 soit supérieur strictement au seuil de tension TH1. La résistance R12 permet le réglage fin du seuil de tension TH2.

Lorsque la tension V_{PV} dépasse le seuil de tension TH2, un courant alimente la gâchette du thyristor T1 et en provoque le déclenchement. Comme cela a été décrit précédemment, lorsqu'il est déclenché, le thyristor T1 maintient en court-circuit les bornes PV1 du PV2 du panneau photovoltaïque 10 tant que le panneau photovoltaïque 10 continue de fonctionner, notamment tant qu'il y a assez de lumière illuminant le panneau photovoltaïque 10. Une intervention d'un opérateur est alors nécessaire pour faire fonctionner le circuit limiteur 40 à nouveau correctement. Le seuil de tension TH2 est supérieur strictement au seuil de tension TH1, de sorte que le déclenchement du thyristor T1 ne se produit que lors d'un mauvais fonctionnement du transistor M1. Le thyristor T1 se déverrouille lorsque le courant qui le traverse tombe à 0 A, ce qui se produit lorsque le panneau photovoltaïque 10 ne reçoit plus de lumière, notamment pendant la nuit. De façon avantageuse, si le lendemain le défaut subsiste sur le circuit écrêteur 30, le thyristor TH1 est à nouveau enclenché si la tension V_{PV} atteint le seuil de tension TH2. Le deuxième circuit écrêteur 45 est donc une sécurité vis-à-vis d'un défaut de fonctionnement du premier circuit écrêteur 30.

Le mode de réalisation du circuit limiteur de tension 40 de la figure 10 permet, de façon avantageuse, d'empêcher le déclenchement intempestif du deuxième circuit écrêteur 45 puisqu'il fait dépendre la mise en route du deuxième circuit écrêteur 45 à la mise en route du premier circuit écrêteur formé par le comparateur AO et ses deux ponts diviseurs.

Dans les modes de réalisation du circuit limiteur de tension 40 décrits précédemment, la mise en court-circuit du panneau photovoltaïque10 par le deuxième circuit écrêteur 45 de manière durable facilite une détection de défaut, par exemple dans le cas d'une application dans un véhicule solaire par l'électronique du véhicule.

Des simulations ont été réalisées. Les paramètres de simulation sont les mêmes que ceux décrits précédemment pour l'obtention des courbes de la figure 5. En outre, la résistance R9 est égale à 4,7 kΩ, la résistance R10 est égale à 15 kΩ, la résistance R11 est égale à 2,2 kΩ, la capacité du condensateur C3 est égale à 470 nF, la résistance R12 est égale à 10 Ω, la résistance R13 est égale à 15 kΩ. La tension Zener V_{Z5} est égale à 51 V et la tension Zener V_{Z6} est égale à 12 V. Le seuil de tension TH2 est donc égal à 63 V. La résistance R12 est égale à 10 Ω.

La figure 11 représente des courbes d'évolution de la tension V_{PV}, de la tension V_{AO} et de la tension V_{C3} en fonction du temps après la mise en route de l'installation solaire comprenant le circuit limiteur de courant 40 de la figure 10 lors d'un fonctionnement normal du premier circuit écrêteur 30. Comme le transistor M2 est passant chaque fois que la tension de sortie V_{AO} fournie par le comparateur AO est à l'état haut, on observe bien que le potentiel V_{C3} à l'électrode du condensateur C3 située du côté du transistor M2 s'élève sensiblement jusqu'à la tension V_{PV}.

La figure 12 représente des courbes d'évolution de la tension V_{PV}, de la tension V_{AO} et de la tension V_{C3} en fonction du temps après la mise en route de l'installation solaire comprenant le circuit limiteur de courant 40 de la figure 10 lors d'un fonctionnement anormal du premier circuit écrêteur 30, le transistor M1 étant remplacé par un circuit ouvert.

La tension V_{AO} s'élève dès que la tension V_{PV} dépasse le seuil de tension TH1, qui est égal à environ 60 V. Comme le transistor M1 n'est pas fonctionnel, la tension V_{PV} continue d'augmenter jusqu'au seuil de tension TH2, égal à 63 V. Ceci entraîne le déclenchement du thyristor T1 et met le panneau photovoltaïque 10 sensiblement en court-circuit. Il en résulte une diminution de la tension V_{PV}.

La figure 13 est un schéma électrique d'un circuit limiteur de tension 50 comprenant un autre mode de réalisation du premier circuit écrêteur à transistor MOS. Le premier circuit écrêteur à transistor MOS comprend l'ensemble des éléments du premier circuit écrêteur 30 représenté en figure 3 et comprend en outre, un condensateur C4 et une résistance R16 en série, l'ensemble comprenant le condensateur C4 et la résistance R16 en série couplant, de préférence connectant, l'entrée inverseuse (-) de l'amplificateur opérationnelle AO à la sortie de l'amplificateur opérationnelle AO. Le premier circuit écrêteur comprend, en outre, une résistante R17 couplant, de préférence connectant, le noeud N2 à l'entrée inverseuse (-) de l'amplificateur opérationnelle AO.

L'amplificateur opérationnel AO est utilisé avec une boucle de rétroaction de type RC de la sortie vers l'entrée inverseuse (-) formée par le condensateur C4 et la résistance R16 en série. L'entrée non-inverseuse (+) de l'amplificateur opérationnel AO est soumise à une fraction en tension de la tension V_{PV}. On obtient ainsi un régulateur du type Proportionnel-Intégral en tension, la tension au point milieu N2 étant la consigne du régulateur et la tension au point milieu N1 étant le retour de mesure de tension à asservir.

Dans ce mode de réalisation, le transistor M1 est commandé en mode linéaire et non plus en mode bloqué saturé comme pour le mode de réalisation décrit précédemment en relation avec la figure 3.

Des simulations ont été réalisées. Les paramètres de simulation sont les mêmes que ceux décrits précédemment pour l'obtention des courbes de la figure 5. En outre, la résistance R16 est égale à 3,3 kΩ, la capacité du condensateur C4 est égale à 220 pF, et la résistance R17 est égale à 3,3 kΩ.

La figure 14 représente des courbes d'évolution de la tension V_{PV}, de la tension V_{AO} et du courant I_{M1} circulant dans le transistor M1 en fonction du temps après la mise en route de l'installation solaire comprenant le circuit limiteur de tension 50 de la figure 13.

Le circuit limiteur de tension 30, 40, ou 50 décrit précédemment peut être intégré à l'entrée de l'électronique du côté de la charge 20 mais également au sein du panneau photovoltaïque 10 pour obtenir un panneau photovoltaïque autonome en terme de limitation de tension. Le fonctionnement du circuit limiteur de tension est totalement transparent pour la commande du panneau photovoltaïque 10 qui peut mettre en oeuvre un algorithme permettant de poursuite de point de puissance maximale (MPPT, sigle anglais pour Maximum Power Point Tracking).

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, le mode de réalisation du premier circuit écrêteur représenté en figure 13 peut être utilisé en combinaison avec chacun des modes de réalisation du deuxième circuit écrêteur représentés sur les figures 8, 9, et 10.

Enfin, la mise en oeuvre pratique des modes de réalisation et variantes décrits est à la portée de l'homme du métier à partir des indications fonctionnelles données ci-dessus.

## Revendications

1. Installation solaire comprenant un panneau photovoltaïque (10) ayant des première et deuxième bornes (PV1, PV2), destinées à être couplées à une charge (20), un premier circuit (30) de limitation de la tension (V_{PV}) entre les première et deuxième bornes comprenant un premier transistor MOS (M1) couplant les première et deuxième bornes, le premier circuit étant configuré pour rendre passant le premier transistor MOS (M1) lorsque la tension (V_{PV}) dépasse un premier seuil de tension (TH1), et un deuxième circuit (45) de limitation de la tension (V_{PV}) entre les première et deuxième bornes comprenant un thyristor (T1) couplant les première et deuxième bornes (PV1, PV2), le deuxième circuit étant configuré pour rendre passant le thyristor lorsque la tension (V_{PV}) dépasse un deuxième seuil de tension (TH2), strictement supérieur au premier seuil de tension (TH1).

2. Installation solaire selon la revendication 1, dans laquelle le premier circuit (30) comprend un premier pont diviseur de tension couplant les première et deuxième bornes (PV1, PV2), un deuxième pont diviseur de tension couplant les première et deuxième bornes, et un amplificateur opérationnel (AO) comprenant une sortie couplée à la grille du premier transistor MOS (M1), une entrée non inverseuse couplée à un premier point milieu (N1) du premier pont diviseur de tension, et une entrée inverseuse couplée à un deuxième point milieu (N2) du deuxième pont diviseur de tension.

3. Installation solaire selon la revendication 2, dans laquelle le premier pont diviseur de tension comprend une première résistance (R3) en série avec une deuxième résistance (R4), et dans laquelle le deuxième pont diviseur de tension comprend une troisième résistance (R5) en série avec une première diode Zener.

4. Installation solaire selon la revendication 2 ou 3, dans laquelle l'amplificateur opérationnel (AO) fonctionne en comparateur.

5. Installation solaire selon la revendication 1, dans laquelle le deuxième circuit comprend un deuxième transistor MOS (M2) en série avec un condensateur (C3), l'ensemble comprenant le deuxième transistor MOS (M2) et le condensateur (C3) couplant les première et deuxième bornes (PV1, PV2), et un circuit abaisseur de tension couplant une électrode du condensateur à la gâchette du thyristor (T1), le deuxième circuit étant configuré pour rendre passant le deuxième transistor simultanément au premier transistor MOS (M1).

6. Installation solaire selon la revendication 5, dans laquelle le circuit abaisseur de tension comprend au moins une deuxième diode Zener (Z5, Z6).

7. Installation solaire selon la revendication 5 dans son rattachement à la revendication 2, dans laquelle le deuxième circuit comprend un transistor bipolaire (Q1) en série avec une quatrième résistance (R9), l'ensemble comprenant le transistor bipolaire (Q1) et la quatrième résistance (R9) couplant les première et deuxième bornes (PV1, PV2), la sortie de l'amplificateur opérationnelle (AO) étant couplée à la base du transistor bipolaire (Q1), et la grille du deuxième transistor MOS (M2) étant couplée à un noeud entre le transistor bipolaire (Q1) et la quatrième résistance (R9).

8. Installation solaire selon l'une quelconque des revendications 1 à 7, dans laquelle la première borne (PV1) est destinée à être connectée à une troisième borne (CH1) de la charge (20), dans laquelle la deuxième borne (PV2) est destinée à être connectée à une quatrième borne (CH2) de la charge, et dans laquelle le premier circuit (30 ; 40 ; 50) de limitation de la tension (V_{PV}) ne comprend pas de composant électronique couplé entre la première borne et la troisième borne ou couplé entre la deuxième borne et la quatrième borne.

9. Véhicule (1) comprenant une installation solaire selon l'une quelconque des revendications 1 à 8.

## Patentansprüche

1. Eine Solaranlage, die ein Photovoltaikpanel (10) aufweist, das einen ersten und einen zweiten Anschluss (PV1, PV2) aufweist, die zum Koppeln mit einer Last (20) vorgesehen sind, einen ersten Schaltkreis (30) zum Begrenzen der Spannung (V_{PV}) zwischen dem ersten und dem zweiten Anschluss, der einen ersten MOS-Transistor (M1) aufweist, der den ersten und den zweiten Anschluss koppelt, wobei der erste Schaltkreis eingerichtet ist, den ersten MOS-Transistor (M1) einzuschalten, wenn die Spannung (V_{PV}) einen ersten Spannungsschwellenwert (TH1) überschreitet, und einen zweiten Schaltkreis (45) zum Begrenzen der Spannung (V_{PV}) zwischen dem ersten und dem zweiten Anschluss, der einen Thyristor (T1) aufweist, der den ersten und den zweiten Anschluss (PV1, PV2) koppelt, wobei der zweite Schaltkreis eingerichtet ist, den Thyristor einzuschalten, wenn die Spannung (V_{PV}) einen zweiten Spannungsschwellenwert (TH2) überschreitet, der größer als der erste Spannungsschwellenwert (TH1) ist.

2. Die Solaranlage nach Anspruch 1, wobei der erste Schaltkreis (30) eine erste Spannungsteilerbrücke aufweist, die den ersten und den zweiten Anschluss (PV1, PV2) koppelt, eine zweite Spannungsteilerbrücke, die den ersten und den zweiten Anschluss koppelt, und einen Operationsverstärker (AO), der einen Ausgang, der mit dem Gate des ersten MOS-Transistors (M1) gekoppelt ist, einen nichtinvertierenden Eingang, der mit einem ersten Mittelpunkt (N1) der ersten Spannungsteilerbrücke gekoppelt ist, und einen invertierenden Eingang, der mit einem zweiten Mittelpunkt (N2) der zweiten Spannungsteilerbrücke gekoppelt ist, aufweist.

3. Die Solaranlage nach Anspruch 2, wobei die erste Spannungsteilerbrücke einen ersten Widerstand (R3) in Reihe mit einem zweiten Widerstand (R4) aufweist und wobei die zweite Spannungsteilerbrücke einen dritten Widerstand (R5) in Reihe mit einer ersten Zenerdiode aufweist.

4. Die Solaranlage nach Anspruch 2 oder 3, wobei der Operationsverstärker (AO) als Komparator arbeitet.

5. Die Solaranlage nach Anspruch 1, wobei der zweite Schaltkreis einen zweiten MOS-Transistor (M2) in Reihe mit einem Kondensator (C3) aufweist, wobei die Anordnung, die den zweiten MOS-Transistor (M2) und den Kondensator (C3) aufweist, den ersten und den zweiten Anschluss (PV1, PV2) koppelt, und eine Spannungsreduktionsschaltung, die eine Elektrode des Kondensators an das Gate des Thyristors (T1) koppelt, wobei der zweite Schaltkreis eingerichtet ist, den zweiten Transistor gleichzeitig mit dem ersten MOS-Transistor (M1) einzuschalten.

6. Die Solaranlage nach Anspruch 5, wobei der Spannungsreduktionsschaltung wenigstens eine zweite Zenerdiode (Z5, Z6) aufweist.

7. Die Solaranlage nach Anspruch 5 in Abhängigkeit von Anspruch 2, wobei der zweite Schaltkreis einen Bipolartransistor (Q1) in Reihe mit einem vierten Widerstand (R9) aufweist, wobei die Anordnung, die den Bipolartransistor (Q1) und den vierten Widerstand (R9) aufweist, den ersten und den zweiten Anschluss (PV1, PV2) koppelt, wobei der Ausgang des Operationsverstärkers (AO) mit der Basis des Bipolartransistors (Q1) gekoppelt ist und wobei das Gate des zweiten MOS-Transistors (M2) an einem Knoten zwischen dem Bipolartransistor (Q1) und dem vierten Widerstand (R9) gekoppelt ist.

8. Die Solaranlage nach einem der Ansprüche 1 bis 7, wobei der erste Anschluss (PV1) zum Verbinden mit einem dritten Anschluss (CH1) der Last (20) vorgesehen ist, wobei der zweite Anschluss (PV2) zum Verbinden mit einem vierten Anschluss (CH2) der Last vorgesehen ist und wobei der erste Schaltkreis (30; 40; 50) zum Begrenzen der Spannung (V_{PV}) keine elektronische Komponente aufweist, die zwischen dem ersten Anschluss und dem dritten Anschluss gekoppelt ist oder zwischen dem zweiten Anschluss und dem vierten Anschluss gekoppelt ist.

9. Ein Fahrzeug (1), das eine Solaranlage nach einem der Ansprüche 1 bis 8 aufweist.

## Claims

1. Solar installation comprising a photovoltaic panel (10) having first and second terminals (PV1, PV2), intended to be coupled to a load (20), a first circuit (30) for limiting the voltage (V_{PV}) between the first and second terminals comprising a first MOS transistor (M1) coupling the first and second terminals, the first circuit being configured to turn on the first MOS transistor (M1) when the voltage (V_{PV}) exceeds a first voltage threshold (TH1), and a second circuit (45) for limiting the voltage (V_{PV}) between the first and second terminals comprising a thyristor (T1) coupling the first and second terminals (PV1, PV2), the second circuit being configured to turn on the thyristor when the voltage (V_{PV}) exceeds a second voltage threshold (TH2), greater than the first voltage threshold (TH1).

2. Solar installation according to claim 1, wherein the first circuit (30) comprises a first voltage dividing bridge coupling the first and second terminals (PV1, PV2), a second voltage dividing bridge coupling the first and second terminals, and an operational amplifier (AO) comprising an output coupled to the gate of the first MOS transistor (M1), a non-inverting input coupled to a first midpoint(N1) of the first voltage dividing bridge, and an inverting input coupled to a second midpoint (N2) of the second voltage dividing bridge.

3. Solar installation according to claim 2, wherein the first voltage dividing bridge comprises a first resistor (R3) in series with a second resistor (R4), and wherein the second voltage dividing bridge comprises a third resistor (R5) in series with a first Zener diode.

4. Solar installation according to claim 2 or 3, wherein the operational amplifier (AO) operates as a comparator.

5. Solar installation according to claim 1, wherein the second circuit comprises a second MOS transistor (M2) in series with a capacitor (C3), the assembly comprising the second MOS transistor (M2) and the capacitor (C3) coupling the first and second terminals (PV1, PV2), and a voltage step-down circuit coupling an electrode of the capacitor to the gate of the thyristor (T1), the second circuit being configured to turn on the second transistor simultaneously with the first MOS transistor (M1).

6. Solar installation according to claim 5, wherein the voltage step-down circuit comprises at least one second Zener diode (Z5, Z6).

7. Solar installation according to claim 5 as dependent on claim 2, wherein the second circuit comprises a bipolar transistor (Q1) in series with a fourth resistor (R9), the assembly comprising the bipolar transistor (Q1) and the fourth resistor (R9) coupling the first and second terminals (PV1, PV2), the output of the operational amplifier (AO) being coupled to the base of the bipolar transistor (Q1), and the gate of the second MOS transistor (M2) being coupled to a node between the bipolar transistor (Q1) and the fourth resistor (R9).

8. Solar installation according to any of claims 1 to 7, wherein the first terminal (PV1) is intended to be connected to a third terminal (CH1) of the load (20), wherein the second terminal (PV2) is intended to be connected to a fourth terminal (CH2) of the load, and wherein the first circuit (30; 40; 50) for limiting the voltage (V_{PV}) comprises no electronic component coupled between the first terminal and the third terminal or coupled between the second terminal and the fourth terminal.

9. Vehicle (1) comprising a solar installation according to any of claims 1 to 8.
